# EUROPEAN PATENT SPECIFICATION

(11) **EP 3 374 217 B1**
(45) Date of publication and mention of the grant of the patent: **11.09.2019**
(21) Application number: 16813255.3
(22) Date of filing: 07.11.2016
(51) Int. Cl.: B60H 3/02

(54) **A HEATING AND DEMISTING SYSTEM**
HEIZ- UND ENTNEBELUNGSSYSTEM
SYSTÈME DE CHAUFFAGE ET DE DÉSEMBUAGE

(30) Priority: 11.11.2015 TR 201514162
(43) Date of publication of application: 19.09.2018
(73) Proprietor: Tofas Turk Otomobil Fabrikasi Anonim Sirketi, Bursa (TR)
(72) Inventor: AYARTURK, Hasan, 16369 Bursa (TR)
(74) Representative: Dericioglu Kurt, Ekin
(86) International application number: PCT/TR2016/050428
(87) International publication number: WO 2017/082844

(56) References cited:
- JP-A- 2000 264 054
- JP-A- 2006 143 042
- JP-A- 2006 306 293

## Description

### Field of the Invention

The present invention relates to a heating and demisting system, which enables to deliver warm and humid air to the passengers in the vehicle and to deliver air with reduced relative humidity rate to the windows, and which is provided in a single blower.

### Background of the Invention

Today, in order to comply with the legal demisting regulations, air temperature is increased above the comfort level in vehicles so as to reduce relative humidity of the air. This causes the driver and the passengers to get disturbed by the high temperature. In some vehicles, in order to comply with the legal demisting regulations, air conditioning systems are operated and thus firstly the humidity in the air is condensed and discharged, and then the air is heated up to comfort level. In such systems, extra energy is consumed since air conditioning system is operated during dehumidification.

In the state of the art, in air drying systems with desiccant, while the temperature of the drying air increases, temperature of the regeneration air decreases. When these systems are used for the vehicles, while the temperature of the air supplied to the passengers, to whom warm and humid air is desired to be delivered, decreases, air with increased temperature is delivered to the windows to which only air with reduced relative humidity is desired to be delivered. This requires the air delivered to the passengers to be heated more and thus leads to more energy consumption. There is provided a second dry air generation system and dry air carrier air ducts for vehicle demisting systems. This complicates the system and increases the cost and weight. Vehicle range is shortened particularly in electrical vehicles since the amount of energy consumed for cooling and heating is high.

Air, whose relative humidity is reduced too much in order to prevent misting, causes health problems such as headache and dry throat. Additional humidifying systems are used in houses in order to eliminate this problem.

Since the air drying systems in the state of the art are expensive and very complicated (additional motor to rotate the wheel, heating serpentine, moist air and dry air fans), they cannot be brought to sizes and weights that can be used for vehicles.

In the state-of-the-art air drying systems with solid desiccant, the air is passed through a rotor with desiccant and the humidity in the air is reduced at fixed enthalpy thereby increasing temperature of the air. Regeneration air is passed through a part of the rotor with desiccant after it is heated, and due to high temperature, a certain amount of water evaporates therein and temperature thereof decreases at fixed enthalpy. The warm and humid air is discharged to the outer environment and the dry and warm air is passed through the water serpentine and after its temperature is brought to comfort level, it is delivered to the indoor environment.

Document JP2006306293 shows a heating and demisting system according to the preamble of claim 1.

United States patent document no US5512083A, an application known in the state of the art, discloses a system which withdraws the dry and warm air in the vehicle and blows moist air. In the said invention, rotor with desiccant and defroster are used thereby enabling blowing of moist air.

United States patent document no US5873256A, an application known in the state of the art, relates to delivery of warm and dry air in the vehicle cabin to be delivered into cabin as moist and warm air by using defroster and rotor with desiccant. There are provided air filters in the system of the said invention which provide antibacterial property. Furthermore, the temperature and the relative humidity are enabled to be decreased.

While the heating and demisting systems in the state of the art are complicated and expensive, the heating and demisting system of the present invention is simple and inexpensive as it is placed in a single blower.

### Summary of the Invention

An objective of the present invention is to provide a heating and demisting system which enables to deliver warm and humid air to the passengers in the vehicle.

Another objective of the present invention is to provide a heating and demisting system which enables to deliver air with reduced relative humidity rate to the windows in the vehicle.

A further objective of the present invention is to provide a simple and inexpensive heating and demisting system which is located in a single blower.

Another objective of the present invention is to provide a heating and demisting system which provides energy saving.

### Detailed Description of the Invention

"A heating and demisting system" developed to fulfill the objective of the present invention is illustrated in the accompanying figures, in which:

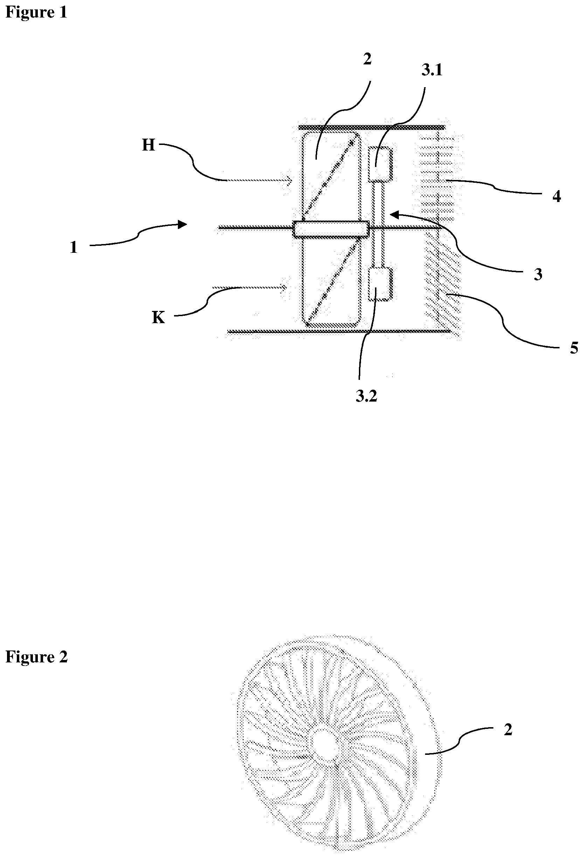

Figure 1 is a view of the heating and demisting system of the present invention.
Figure 2 is a view of the rotor with solid desiccant of the present invention.

The components shown in the figures are each given reference numbers as follows:
**1.** Heating and demisting system
**2.** Rotor with solid desiccant
**3.** Heat transfer element
   **3.1.** Hot part
   **3.2.** Cold part
**4.** Cabin blower grill
**5.** Window blower grill

**H.** Warm air coming from the HVAC module
**K.** Air coming from inside the cabin

A heating and demisting system (1), which enables to deliver warm and humid air to the passengers in the vehicle and to deliver air with reduced relative humidity rate to the windows, and which is provided in a single blower, basically comprises
- at least one rotor (2) with solid desiccant which has a fan geometry and can rotate around its own axis by the flow of a warm air (H) coming from a HVAC module,
- at least one heat transfer element (3), which enables heat transfer between a warm air and an air less warm than the said warm air, and which is positioned parallel to the rotor (2) with solid desiccant and perpendicular to the air flows,
- at least one hot part (3.1) which enables to reheat the warm air (H) coming from the HVAC module whose temperature decreases by being passed over the rotor (2) with solid desiccant and whose humidity level increases upon collecting water vapor over the desiccant,
- at least one air blower grill (4) which enables the air heated by the hot part (3.1) of the heat transfer element (3) to be delivered to the passengers,
- at least one cold part (3.2), which enables to reduce temperature of the air (K) coming from inside the cabin, which is dried and temperature of which is increased upon being sucked by the rotor (2) with solid desiccant that is rotated via the flow of the warm air (H) coming from the HVAC module and being passed over the regenerated desiccant,
- at least one window blower grill (5) which enables to blow the dry air, whose temperature is reduced, to the windows.

In the heating and demisting system (1) of the present invention, the warm air (H) coming from the HVAC module enables rotation of the rotor (2) with solid desiccant which can rotate around its own axis. When passing over the rotor (2) with solid desiccant, the air collects water vapor over the desiccant. Humidity ratio of the air which collects water vapor over the desiccant increases and temperature thereof decreases. Temperature of the air, whose temperature has decreased, is increased again by means of a heat transfer element (3). The rotor (2) with solid desiccant, which can rotate around its own axis by means of the flow of air (H) coming from the HVAC module, sucks the air (K) coming from inside of the cabin and enables it to pass over the regenerated desiccant. Humidity ratio of the air (K) coming from inside the cabin which passes over the regenerated desiccant decreases. Temperature of this dried air increases. Temperature of the air, whose temperature has increased, is decreased again by means of the heat transfer element (3). Thus, warm and humid air is delivered to the passengers from the cabin blower grill (4). Dry and cold air is delivered to the windows from the window blower grill (5). Energy is saved by means of transferring the heat of the air that is dried when passing over the regenerated desiccant to the air whose humidity ratio increases and which gets cold upon collecting water vapor over the desiccant.

The rotor (2) with solid desiccant of the present invention has a fan geometry. This way, it can rotate around its own axis by the flow of the warm air (H) coming from the HVAC module and enables suction of the air (K) coming from inside the cabin by a vacuum effect.

The heat transfer element (3) of the present invention comprises a hot part (3.1) and a cold part (3.2). The said heat transfer element (3) is arranged such that it is parallel to the rotor (2) with solid desiccant and perpendicular to the air flows. The hot part (3.1) is located on the air flow that is desired to be delivered to the passengers and the cold part (3.2) is located on the air flow that is desired to be delivered to the windows. This way, heat transfer is performed between two flows. The hot part (3.1) enables to reheat the cooled humid air that is desired to be delivered to the passengers, and the cold part (3.2) enables to re-cool the warm dry air that is desired to be delivered to the windows.

In one embodiment of the invention, the heat transfer element (3) may be elements such as a heat dissipator, heating rod or heat pump.

In a preferred embodiment of the invention, the said solid desiccant is a drying substance called desiccant.

## Claims

1. A heating and demisting system (1), which enables to deliver warm and humid air to the passengers in the vehicle and to deliver air with reduced relative humidity rate to the windows, and which is provided in a single blower, **characterized by**
- at least one rotor (2) with solid desiccant which has a fan geometry and can rotate around its own axis by the flow of a warm air (H) coming from a HVAC module,
- at least one heat transfer element (3), which enables heat transfer between a warm air and an air less warm than the said warm air, and which is positioned parallel to the rotor (2) with solid desiccant and perpendicular to the air flows,
- at least one hot part (3.1) which enables to reheat the warm air (H) coming from the HVAC module whose temperature decreases by being passed over the rotor (2) with solid desiccant and whose humidity level increases upon collecting water vapor over the desiccant,
- at least one air blower grill (4) which enables the air heated by the hot part (3.1) of the heat transfer element (3) to be delivered to the passengers,
- at least one cold part (3.2), which enables to reduce temperature of the air (K) coming from inside the cabin, which is dried and temperature of which is increased upon being sucked by the rotor (2) with solid desiccant that is rotated via the flow of the warm air (H) coming from the HVAC module and being passed over the regenerated desiccant,
- at least one window blower grill (5) which enables to blow the dry air, whose temperature is reduced, to the windows.

2. A heating and demisting system (1) according to Claim 1, **characterized by** the heat transfer element (3) which enables to transfer the heat of the air that is dried when passing over the regenerated desiccant to the air whose humidity ratio increases and which gets cold upon collecting water vapor over the desiccant.

3. A heating and demisting system (1) according to Claim 1, **characterized by** the heat transfer element (3) wherein heat transfer takes place between its hot part (3.1) and cold part (3.2).

4. A heating and demisting system (1) according to Claim 1, **characterized by** the heat transfer element (3) which can be elements such as a heat dissipator, heating rod or heat pump.

## Patentansprüche

1. Heiz- und Entnebelungssystem (1), das es ermöglicht, den Insassen im Fahrzeug warme und feuchte Luft zuzuführen und Luft mit reduzierter relativer Luftfeuchtigkeit zu den Fenstern zu liefern, und das in einem einzigen Gebläse vorgesehen ist, **gekennzeichnet durch**
- mindestens einen Rotor (2) mit festem Trockenmittel, der eine Lüftergeometrie aufweist und sich durch den Strom einer von einem HVAC-Modul kommenden Warmluft (H) um seine eigene Achse drehen kann,
- mindestens ein Wärmeübertragungselement (3), das den Wärmeaustausch zwischen einer warmen Luft und einer weniger warmen Luft als dieser warmen Luft ermöglicht und das parallel zum Rotor (2) mit festem Trockenmittel und senkrecht zu den Luftströmungen angeordnet ist,
- mindestens ein heiße Teil (3.1), das es ermöglicht, die vom HVAC-Modul kommende Warmluft (H) aufzuwärmen, deren Temperatur sinkt, indem sie mit festem Trockenmittel über den Rotor (2) geleitet wird und deren Feuchtigkeitsgehalt steigt, nachdem Wasserdampf über das Trockenmittel gesammelt wurde,
- mindestens ein Gebläsegrill (4), das es ermöglicht, dass die durch einen heißen Teil (3.1) des Wärmeübertragungselements (3) erhitzte Luft an die Insassen abgegeben wird,
- mindestens einen kalten Teil (3.2), der es ermöglicht, die Temperatur der aus dem Inneren der Kabine kommenden Luft (K) zu reduzieren, die getrocknet ist und deren Temperatur beim Ansaugen durch den Rotor (2) mit festem Trockenmittel erhöht wird, das über den Strom der aus dem HVAC-Modul kommende Warmluft (H) gedreht und über das regenerierte Trockenmittel geleitet wird,
- mindestens einen Fenstergebläsegrill (5), der es ermöglicht, die trockene Luft, deren Temperatur reduziert ist, zu den Fenstern zu blasen.

2. Heiz- und Entnebelungssystem (1) nach Anspruch 1, **gekennzeichnet durch** das Wärmeübertragungselement (3), das es ermöglicht, die Hitze der beim Durchleiten über das regenerierte Trockenmittel getrockneten Luft auf die Luft zu übertragen, deren Feuchtigkeitsverhältnis ansteigt und die beim Sammeln von Wasserdampf über das Trockenmittel kalt wird.

3. Heiz- und Entnebelungssystem (1) nach Anspruch 1, **gekennzeichnet durch** das Wärmeübertragungselement (3), wobei die Wärmeübertragung zwischen seinem heißen Teil (3.1) und dem kalten Teil (3.2) erfolgt.

4. Heiz- und Entnebelungssystem (1) nach Anspruch 1, **gekennzeichnet durch** das Wärmeübertragungselement (3), das Elemente wie ein Heizleiter, Heizstab oder eine Heizpumpe sein können.

## Revendications

1. Système de chauffage et de désembuage (1), qui permet de fournir de l'air chaud et humide aux passagers du véhicule et de fournir de l'air avec un taux d'humidité relative réduit aux fenêtres, et qui est prévu dans une seule soufflante, **caractérisé en ce que**
- au moins un rotor (2) à dessiccateur solide qui présente une géométrie de ventilateur et qui peut tourner autour de son propre axe par l'écoulement d'un air chaud (H) provenant d'un module HVAC,
- au moins un élément de transfert de chaleur (3), qui permet le transfert de chaleur entre un air chaud et un air moins chaud que ledit air chaud, et qui est positionné parallèlement au rotor (2) avec du déshydratant solide et perpendiculairement aux flux d'air,
- au moins une partie chaude (3.1) qui permet de réchauffer l'air chaud (H) provenant du module HVAC dont la température diminue par passage sur le rotor (2) avec un dessiccateur solide et dont le taux d'humidité augmente lorsque la vapeur d'eau s'accumule sur le dessiccateur,
- au moins une grille de soufflerie d'air (4) qui permet de fournir aux passagers l'air chauffé par la partie chaude (3.1) de l' élément de transfert de chaleur (3),
- au moins une partie froide (3.2), qui permet de réduire la température de l'air (K) provenant de l'intérieur de la cabine, qui est séché et dont la température est augmentée lors de l'aspiration par le rotor (2) avec un déshydratant solide qui est mis en rotation par l'écoulement de l'air chaud (H) provenant du module HVAC et qui passe sur le déshydratant régénéré,
- au moins une grille de soufflage (5) qui permet de souffler l'air sec, dont la température est réduite, vers les fenêtres.

2. Système de chauffage et de désembuage (1) selon la revendication 1, **caractérisé par** l'élément de transfert de chaleur (3) qui permet de transférer la chaleur de l'air qui est séché lors du passage sur le déshydratant régénéré à l'air dont le taux d'humidité augmente et qui devient froid lors de la collecte de vapeur d'eau sur le déshydratant.

3. Système de chauffage et de désembuage (1) selon la revendication 1, **caractérisé par** l'élément de transfert de chaleur (3) dans lequel le transfert de chaleur a lieu entre sa partie chaude (3.1) et sa partie froide (3.2).

4. Système de chauffage et de désembuage (1) selon la revendication 1, **caractérisé par** l'élément de transfert de chaleur (3) qui peut être des éléments tels qu'un dissipateur de chaleur, un thermoplongeur ou une pompe à chaleur.
